(19) Europäisches Patentamt
European Patent Office
Office européen des brevets

(11) **EP 1 547 293 B1**

(12) **EUROPÄISCHE PATENTSCHRIFT**

(45) Veröffentlichungstag und Bekanntmachung des Hinweises auf die Patenterteilung:
**17.02.2010 Patentblatt 2010/07**

(21) Anmeldenummer: **03750560.9**

(22) Anmeldetag: **17.09.2003**

(51) Int Cl.:
**H04L 1/20** (2006.01)

(86) Internationale Anmeldenummer:
**PCT/EP2003/010326**

(87) Internationale Veröffentlichungsnummer:
**WO 2004/034630 (22.04.2004 Gazette 2004/17)**

(54) **VERFAHREN ZUM BESTIMMEN DES PHASEN- UND/ODER DES AMPLITUDEN-RAUSCHSPEKTRUMS EINES DIGITAL MODULIERTEN SIGNALS**

METHOD FOR DETERMINING THE PHASE AND/OR AMPLITUDE NOISE SPECTRUM OF A DIGITALLY MODULATED SIGNAL

PROCEDE DE DETERMINATION DU SPECTRE DE BRUIT DE PHASE ET/OU D'AMPLITUDE D'UN SIGNAL MODULE NUMERIQUEMENT

(84) Benannte Vertragsstaaten:
**AT BE BG CH CY CZ DE DK EE ES FI FR GB GR HU IE IT LI LU MC NL PT RO SE SI SK TR**

(30) Priorität: **04.10.2002 DE 10246316**

(43) Veröffentlichungstag der Anmeldung:
**29.06.2005 Patentblatt 2005/26**

(73) Patentinhaber: **Rohde & Schwarz GmbH & Co. KG
81671 München (DE)**

(72) Erfinder:
• **BALZ, Christoph
81543 München (DE)**

• **HOFMEISTER, Martin
81541 München (DE)**

(74) Vertreter: **Körfer, Thomas et al
Mitscherlich & Partner
Patent- und Rechtsanwälte
Postfach 33 06 09
80066 München (DE)**

(56) Entgegenhaltungen:
**EP-A- 1 096 748      US-A- 4 953 186
US-A- 5 187 719       US-B1- 6 246 717
US-B1- 6 275 523**

EP 1 547 293 B1

**Beschreibung**

Die Erfindung betrifft ein Verfahren zum Bestimmen des Phasen- und/oder des Amplituden-Rauschspektrums eines digital modulierten Signals.

Für die Analyse und meßtechnische Beurteilung digital modulierter Signale ist die graphische Darstellung des Phasen-Rauschspektrums und des Amplituden-Rauschspektrums der an der Signalaufbereitung beteiligten Oszillatoren eine wichtige Meßgröße. Eine solche Messung hat insbesondere Bedeutung bei der digitalen Übertragung von Fernseh-Signalen, die beispielsweise QAM(Quadrature Amplitude Modulation)-moduliert oder mVSB(Vestigial SideBand)-moduliert sind.

Die digital modulierten Signale werden in der Regel ohne Restträger oder mit nur geringem Restträger aufbereitet. Das Nutzspektrum des modulierten Signals erstreckt sich über eine relativ große Bandbreite. In diesem Nutzspektrum des modulierten Signals liegt aber auch das Spektrum des zu messenden Phasenrauschens bzw. des zu messenden Amplitudenrauschens. Zur Vermessung des Spektrums des Phasenrauschens bzw. des Amplitudenrauschens war es bisher üblich, die Modulation abzuschalten und ein kontinuierliches CW (Continuous Wave)-Signal zu übertragen. Dieses CW-Signal kann dann mit Hilfe eines Spektrum-Analysators untersucht werden und das Phasenrausch-Spektrum bzw. Amplitudenrausch-Spektrum kann erfaßt werden, wobei bei diesem Verfahren noch die Schwierigkeit besteht, das Phasenrauschen von dem Amplitudenrauschen zu trennen. Eine gleichzeitige Übertragung von Daten ist in diesem, der Messung des Phasen- bzw. Amplitudenrauschens dienenden Betriebszustand nicht möglich. Dies ist jedoch nachteilig, da der normale Betrieb für die Messung unterbrochen werden muß, was bei Service-Messungen im laufenden Sendebetrieb nicht möglich ist.

Aus der US 6,366,621 B1 geht ein Verfahren zum Bestimmen der Referenzphase an einem 8VSB- bzw. 16VSB-Signal hervor. In dieser Druckschrift wird vorgeschlagen, den Pilotton rechnerisch zu rekonstruieren. Eine Messung kurzzeitiger Phasenfluktuationen (Phasen-Jitter) und insbesondere eine Messung des sich über das Spektrum der Nutzdaten erstreckenden Spektrums dieser Phasenfluktuationen ist mit diesem Verfahren nicht möglich.

Aus der US 6,246,717 B1 sind eine Mess-Test-Vorrichtung und ein Verfahren für die Messung des sogenannten Phasenrauschens im laufenden Sendebetrieb bekannt. Dieses Verfahren bzw. diese Vorrichtung ermittelt die Nichtlinearität der Phase durch einen Vergleich der ungefilterten Signalabtastung mit einer generierten Signalabtastung. Die lineare Verzerrung wird von der empfangenen Signalabtastung abgezogen, um das nichtlineare Verhalten des Senders präzise beschreiben zu können. Die ungefilterte Signalabtastung wird erzeugt, ohne einen Empfänger-Formfilter anzuwenden. Die Referenz-Signalabtastung wird generiert aus den geschätzten gesendeten Messwerten, abgeleitet von der ungefilterten Signalabtastung. Die gesendeten Messwerte werden abgeschätzt unter zu Hilfenahme einer segmentierten Abkappschaltung (Doppelbegrenzer), welche den Entscheidungsschwellwert der Konstellation von der ungefilterten Signalabtastung dynamisch abschätzt. Eine gewichtete Polynom-Regression nach der Methode der kleinsten Quadrate wird auf die Phasen-Fehler-Abtastung der ungefilterten Signalabtastung angewendet, um eine Phase einer nichtlinearen Fehler-Funktion abzuschätzen, wobei der Einfluss anderer, nicht systematischer Störungen unterdrückt wird.

Der Erfindung liegt die Aufgabe zugrunde, eine Bestimmung des Phasen-Rauschspektrums und/oder des Amplituden-Rauschspektrums eines digital modulierten Signals während des normalen Modulationsbetriebs zu ermöglichen, ohne daß die Modulation abgeschaltet werden muß.

Die Aufgabe wird hinsichtlich der Bestimmung des Phasen-Rauschspektrums durch die Merkmale des Anspruchs 1 und hinsichtlich der Bestimmung des Amplituden-Rauschspektrums durch die Merkmale des Anspruchs 2 gelöst.

Der Erfindung liegt die Erkenntnis zugrunde, daß das sich dem zu messenden Spektrum des Phasenrauschens bzw. Amplitudenrauschens überlagernde Spektrum der Nutzdaten herausgerechnet werden kann, indem die gemessenen realen, komplexen Abtastwerte (jeweils mit einer Inphase-Komponente (I) und einer Quadraturphase-Komponente (Q)) auf die idealen komplexen Abtastwerte bezogen werden. Die dadurch entstehende Phasendifferenz bzw. das daraus entstehende Amplitudenverhältnis zwischen gemessenen, realen, komplexen Abtastwerten und sich aufgrund der Modulation ergebenden, idealen, komplexen Abtastwerten sind die modulationsbereinigt noch vorhandenen Phasenfluktuationen bzw. Amplitudenfluktuationen, welche die modulationsbereinigte Meßgröße bilden.

Da die Phasenfluktuationen bzw. Amplitudenfluktuationen auf das modulationsbedingt gegebene ideale Basisband-Signal bezogen werden, sind die so erfaßten Phasenfluktuationen bzw. Amplitudenfluktuationen völlig unabhängig von dem gerade übertragenen Modulationssignal. Somit muß der Betrieb nicht unterbrochen werden. Beispielsweise kann das Phasen-Rauschspektrum bzw. Amplituden-Rauschspektrum an einem Fernsehsender gemessen werden, ohne daß das von dem Fernsehsender übertragene Programm unterbrochen werden muß.

Der Bezug zu dem idealen Basisband-Signal läßt sich in einfacher Weise durch Quotientenbildung aus den gemessenen, realen, komplexen Abtastwerten und den daraus extrahierten idealen, komplexen Abtastwerten realisieren. Durch die Quotientenbildung entsteht einerseits die Phasendifferenz zwischen den realen komplexen Abtastwerten und den idealen komplexen Abtastwerten. Andererseits entsteht das Amplitudenverhältnis der Beträge der realen komplexen Abtastwerte und der idealen komplexen Abtastwerte. Für den Fall der Bestimmung des Phasen-Rauschspektrums ist der Betrag des Quotienten auf Eins zu setzen. Für den Fall der Bestimmung des Amplituden-Rauschspektrums ist die Phase des Koeffizienten auf Null zu setzen. Nach Durchführen einer Fourier-Transformation liegt das entsprechende Spektrum vor.

Die Ansprüche 3 und 4 beinhalten vorteilhafte Weiterbildungen der Erfindung.

Ist das zu untersuchende Signal ein mVSB-Signal, so ist es sinnvoll, nur die Inphase-Komponente der idealen Abtastwerte aus den realen Abtastwerten, und zwar aus deren Inphase-Komponente, zu ermitteln. Die Quadraturphase-Komponente der idealen Abtastwerte ergibt sich aus der Inphase-Komponente der idealen Abtastwerte dann durch die dieser Einseitenband-Modulationsart zugrundeliegende Hilbert-Transformation.

Insbesondere bei der Auswertung von mVSB-Signalen ist es vorteilhaft, den komplexen Quotienten aus realen und idealen Abtastwerten durch Interpolationswerte zu ersetzen, wenn der zulässige Wertebereich verlassen wird, insbesondere, wenn der Betrag des realen Abtastwerts einen ersten Schwellwert unterschreitet oder der Imaginärteil des realen Abtastwerts größer als ein zweiter Schwellwert bzw. kleiner als ein dritter Schwellwert ist.

Die Ansprüche 5 bis 8 betreffen ein digitales Speichermedium, ein Computerprogramm bzw. ein Computerprogramm-Produkt zur Durchführung des erfindungsgemäßen Verfahrens.

Ein Ausführungsbeispiel der Erfindung wird nachfolgend unter Bezugnahme auf die Zeichnung näher beschrieben. In der Zeichnung zeigen:

Fig. 1     ein Flußdiagramm zur Erläuterung des erfindungs- gemäßen Verfahrens zum Bestimmen des Phasen-Rauschspektrums;

Fig. 2     ein Flußdiagramm zur Erläuterung des erfindungs- gemäßen Verfahrens zum Bestimmen des Amplituden-Rauschspektrums;

Fig. 3     ein reales Konstellationsdiagramm eines 8VSB- Signals, das durch einen Phasen-Jitter gestört ist;

Fig. 4     das zu Fig. 3 gehörende ideale Konstellations- diagramm;

Fig. 5A     der Phasenfehler $\Delta\varphi$ als Funktion des Abtastindex n;

Fig. 5B     das I/Q-Diagramm der Werte der komplexen Koeffi- zienten aus realen Abtastwerten und idealen Abtastwerten, wobei der Betrag = 1 gesetzt worden ist;

Fig. 5C     das mit dem erfindungsgemäßen Verfahren be- stimmte Phasen-Rauschspektrum;

Fig. 6A     einen vergrößerten Ausschnitt aus Fig. 5A;

Fig. 6B     das zu Fig. 6A gehörende I/Q-Diagramm;

Fig. 6C     das zu Fig. 6A gehörende Phasen-Rauschspektrum, das einen vergrößerten Ausschnitt aus Fig. 5C darstellt; und

Fig. 7     ein Blockschaltbild zur Erläuterung einer Vor- richtung zur Durchführung des erfindungsgemäßen Verfahrens.

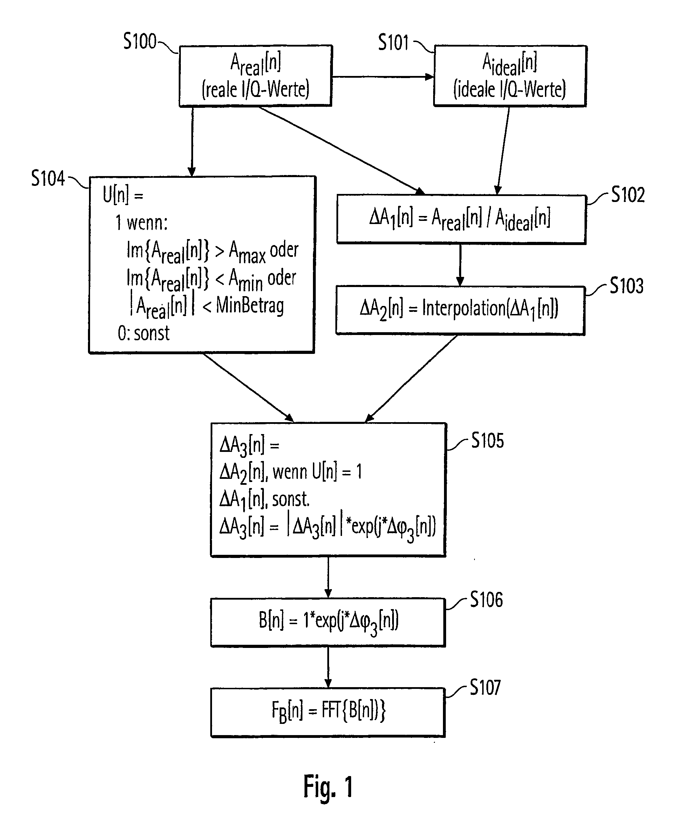

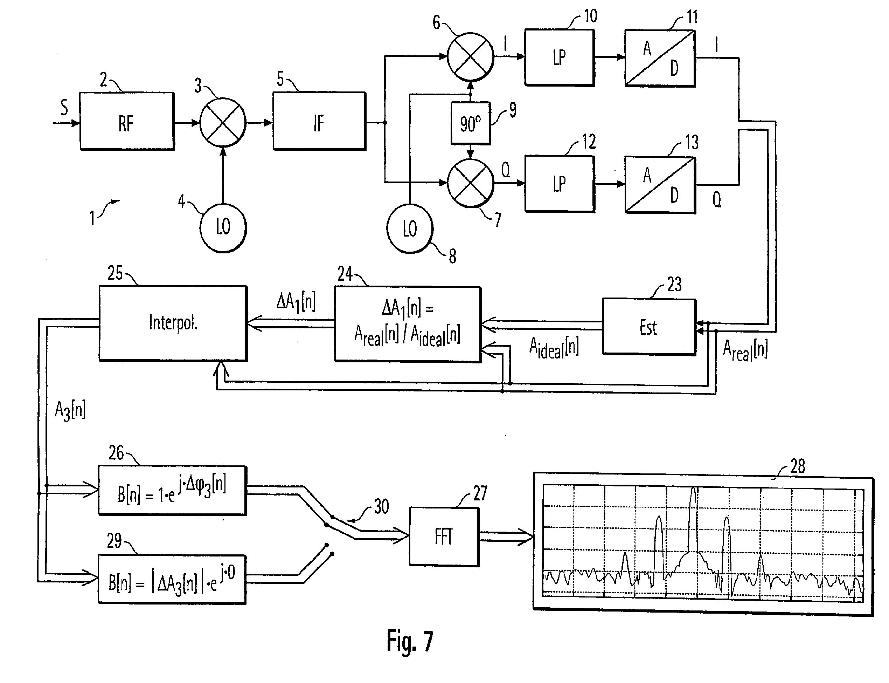

Anhand der Fig. 1 und 7 wird nachfolgend das erfindungsgemäße Verfahren bzw. eine Vorrichtung zur Durchführung des erfindungsgemäßen Verfahrens zum Bestimmen des Phasen-Rauschspektrums eines digital modulierten Signals erläutert.

Bei der in Fig. 7 dargestellten erfindungsgemäßen Vorrichtung 1 wird das zu analysierende digital modulierte Hochfrequenzsignal S zunächst einer Hochfrequenzeinheit 2 zugeführt. In üblicher Weise wird das Signal über einen ersten Mischer 3, der mit einem lokalen oder variablen Oszillator 4 in Verbindung steht, auf eine Zwischenfrequenz heruntergemischt und in einer Zwischenfrequenzeinheit 5 weiterverarbeitet. Mit einem zweiten Mischer 6 und einem dritten Mischer 7 wird das Zwischenfrequenzsignal in das Basisband transformiert. Dazu steht der erste Mischer 6 direkt mit einem zweiten lokalen Oszillator 8 und der dritte Mischer 7 über einen 90°-Phasenschieber 9 mit dem lokalen Oszillator 8 in Verbindung. Die den Mischern 6 bzw. 7 zugeführten Oszillatorsignale sind daher um 90° zueinander phasenverschoben. Am Ausgang des zweiten Mischers 6 entsteht die Inphase-Komponente I des Basisband-Signals, die über einen ersten Tiefpaß 10 einem ersten Analog/Digital-Wandler 11 zugeführt wird. Am Ausgang des dritten Mischers 7 steht die Quadraturphase-Komponente Q des Basisband-Signals zur Verfügung, die über einen zweiten Tiefpaß 12 einem zweiten Analog/Digital-Wandler 13 zugeführt wird. Am Ausgang der Analog/Digital-Wandler 11 und 13 stehen somit komplexe Abtastwerte $A_{real}[n]$ zur Verfügung, welche das komplexe Basisband-Signal des Eingangs-Signals S repräsentieren. n ist der Abtastindex. Die Inphase-Komponente I am Ausgang des ersten Analog/Digital-Wandlers 11 repräsentiert den Realteil und die Quadraturphase-Komponente Q am Ausgang des zweiten Analog/Digital-Wandlers 13 repräsentiert den Imaginärteil dieser komplexen Abtastwerte $A_{real}[n]$.

Angemerkt sei noch, daß vorausgesetzt wird, daß das Basisbandsignal frequenz- und zeitsynchronisiert vorliegt.

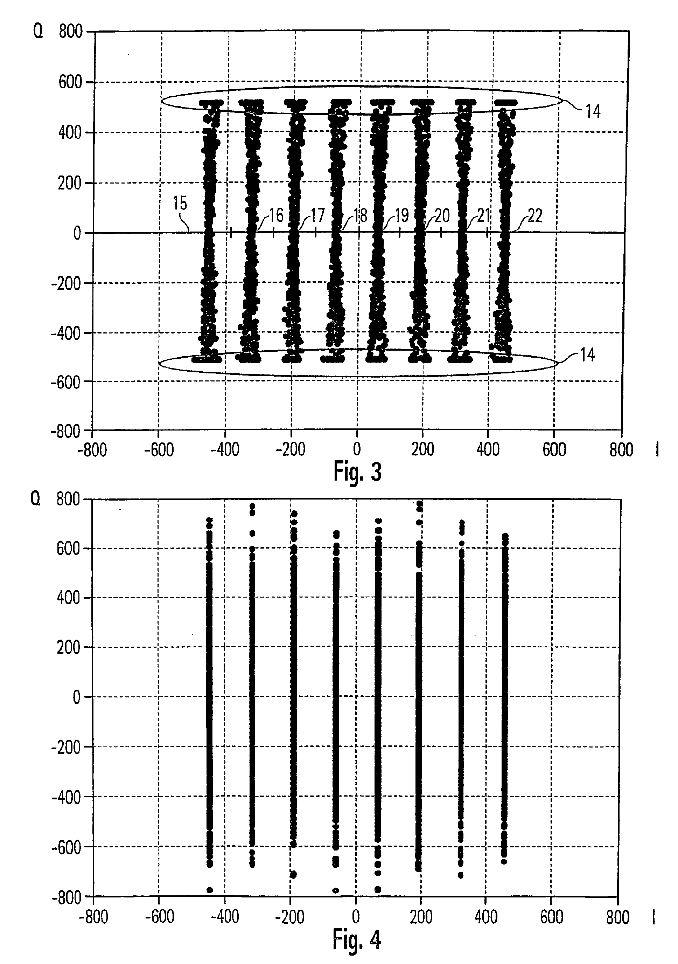

Die vorstehend beschriebene Erzeugung der realen komplexen Abtastwerte $A_{real}[n]$ entspricht dem Schritt S100 in dem Flußdiagramm der Fig. 1. In dem Verfahrensschritt S101 werden aus den realen komplexen Abtastwerten $A_{real}[n]$ ideale komplexe Abtastwerte $A_{ideal}[n]$ erzeugt. Dazu werden in dem Konstellationsdiagramm Einzugsbereiche festgelegt, welche einen bestimmten realen I/Q-Wert genau einem idealen I/Q-Wert zuordnen. Anhand der Fig. 3 und 4 wird dies am Beispiel einer 8VSB-Modulation erläutert, welche beispielsweise zur Übertragung von Videosignalen für das digitale Fernsehen verwendet wird.

Fig. 3 zeigt das Konstellationsdiagramm der realen komplexen Abtastwerte $A_{real}[n]$. Grundsätzlich kann bei der Zuweisung der realen komplexen Abtastwerte $A_{real}[n]$ zu den idealen komplexen Abtastwerten $A_{ideal}[n]$ so vorgegangen werden, daß sowohl die I-Werte als auch die Q-Werte bei dieser Zuweisung berücksichtigt werden und jeder ideale Abtastwert somit einen flächigen Einzugsbereich an realen Abtastwerten hat. Diese Vorgehensweise bietet sich beispielsweise bei einer QAM-Modulation an. Bei der in Fig. 3 vorliegenden mVSB-Modulation ist eine andere Vorgehensweise sinnvoll: Es wird nur der Realteil, d.h. die Inphase-Komponente I, der realen Abtastwerte $A_{real}[n]$ ausgewertet und jeder Inphase-Komponente I der realen Abtastwerte $A_{real}[n]$ wird jeweils eine Inphase-Komponente I eines idealen Abtastwerts $A_{ideal}[n]$ zugewiesen. In Fig. 3 sind die Einzugsbereiche der Inphase-Komponente I der realen komplexen Abtastwerte $A_{real}[n]$, die jeweils zu genau einer Inphase-Komponente der idealen Abtastwerte $A_{ideal}[n]$ führen, durch die Intervalle 15 bis 22 veranschaulicht.

Da bei der mVSB-Modulation jede Quadraturphase-Komponente Q über eine Hilbert-Transformation aus der zeitlich aufeinander folgenden Reihe der Inphase-Komponenten I berechnet werden kann, wird entsprechend einer erfindungsgemäßen Weiterbildung vorgeschlagen, die Quadraturphase-Komponente Q der idealen Abtastwerte $A_{ideal}[n]$ nicht aus der Quadraturphase-Komponente Q der realen Abtastwerte $A_{real}[n]$ zu gewinnen, sondern statt dessen aus der Reihe der Inphase-Komponente der idealen Abtastwerte $A_{ideal}[n]$ über die Hilbert-Transformation zu berechnen.

Die so gewonnenen idealen Abtastwerte $A_{ideal}[n]$ sind in Fig. 4 dargestellt. Dabei fällt auf, daß die in Fig. 3 vorhandene Begrenzung des Wertebereichs, welche mit dem Bezugszeichen 14 veranschaulicht ist, in Fig. 4 nicht mehr vorhanden ist. Hier müssen gegebenenfalls noch entsprechende Interpolationsmaßnahmen durchgeführt werden. Hierauf wird weiter unten noch eingegangen.

Die vorstehend beschriebene Erzeugung der idealen komplexen Abtastwerte $A_{ideal}[n]$ aus den realen komplexen Abtastwerten $A_{real}[n]$ erfolgt in der in Fig. 7 dargestellten Zuweisungseinrichtung 23. In einer Quotientenbildungseinrichtung 24 wird der Quotient

$$\Delta A_1[n] = A_{real}[n] / A_{ideal}[n] \qquad (1)$$

also der komplexe Quotient $\Delta A_1[n]$ aus den realen, komplexen Abtastwerten $A_{real}[n]$ und den idealen komplexen Abtastwerten $A_{ideal}[n]$ berechnet. In dem Flußdiagramm der Fig. 1 ist dies durch den Schritt S102 veranschaulicht.

In einem Verfahrensschritt S103, welcher in dem Interpolator 25 vorgenommen wird, wird eine Interpolation der komplexen Quotienten vorgenommen, wenn diese außerhalb eines bestimmten Wertebereichs liegen und deshalb nicht zuverlässig sind. Wenn der Imaginärteil $Im\{A_{real}[n]\}$ der realen Abtastwerte $A_{real}[n]$ größer als ein vorgegebenes Maximum, d.h. größer als ein Schwellwert $A_{max}$ ist, oder aber kleiner als ein vorgegebenes Minimum, d.h. kleiner als ein vorgegebener Schwellwert $A_{min}$ ist, so kann der Quotient $\Delta A_1[n]$ durch das Zahlenformat digital nicht mehr dargestellt werden und diese begrenzten Werte dürfen nicht berücksichtigt werden. Diese Werte sind vielmehr durch eine Interpolation aus den vorangegangenen und/oder nachfolgenden Werten zu ersetzen.

Die Auflösung der I/Q-Werte zur Bestimmung des Quotienten $\Delta A_1[n]$ ist bestimmt durch die Anzahl der Quantisierungsstufen von $A_{real}[n]$. Der relative Fehler von $\Delta A_1[n]$ ist deshalb um so größer, je kleiner der Betrag von $A_{real}[n]$ ist. Um den Einfluß derartiger zufälliger Fehler zu minimieren, sollten vorzugsweise Werte von $\Delta A_1[n]$ ebenfalls verworfen und durch interpolierte Werte ersetzt werden, wenn der Betrag relativ klein ist, ohne daß dabei das Gesamtergebnis verfälscht wird. Deshalb ist auch dann eine Interpolation vorzunehmen, wenn der Betrag der realen komplexen Abtastwerte $|A_{real}[n]|$ kleiner als ein Schwellwert MinBetrag ist.

Die Feststellung der vorstehend genannten Interpolations-Kriterien erfolgt in dem Verfahrensschritt S104, wobei die von der Interpolation betroffenen Abtastwerte durch eine Markierung (Flag) U[n] markiert werden. Die Interpolationswerte $\Delta A_2[n]$ können in dem Verfahrensschritt S103 für alle Quotientenwerte $\Delta A_1[n]$ berechnet werden, wobei sie in dem Verfahrensschritt S105 nur dann übernommen werden, wenn die Interpolations-Markierung U[n] gesetzt ist. Die nach der Interpolation entstehenden, komplexen (ggf. interpolierten) Quotienten $\Delta A_3[n]$ lassen sich in Polarkoordinaten wie folgt schreiben:

$$\Delta A_3[n] = \left|\Delta A_3[n]\right| \cdot e^{(j \cdot \Delta\varphi_3[n])} \qquad\qquad (2)$$

Erfindungsgemäß wird nun für die Darstellung des Phasen-Rauschspektrums ein modifizierter komplexer Koeffizient $B[n]$ durch Setzen des Betrags $|\Delta A_3[n]|$ des komplexen Quotienten $\Delta A_3[n]$ auf 1 im Schritt S106 in Fig. 1 bzw. in der Modifizierungseinrichtung 26 in Fig. 7 erzeugt:

$$B[n] = 1 \cdot e^{(j \cdot \Delta\varphi_3[n])} \qquad\qquad (3)$$

Bei der Bestimmung des Phasen-Rauschspektrums interessieren die Amplitudenfluktuationen nicht, sondern es interessiert nur das Spektrum der Phasenfluktuationen. Die Phasenfluktuationen werden durch die Differenzphase $\Delta\varphi_3[n]$ bestimmt, denn durch die Quotientenbildung im Schritt S102 entsteht die Differenzphase $\Delta\varphi_1[n] = \varphi_{real} - \varphi_{ideal}$, also die Differenz zwischen der Phase $\varphi_{real}$ der realen Abtastwerte $A_{real}[n]$ und der Phase $\varphi_{ideal}$ der idealen Abtastwerte $A_{ideal}[n]$. $\Delta\varphi_3[n]$ unterscheidet sich von $\Delta\varphi_1[n]$ nur durch die ggf. noch vorgenommene Interpolation. Eine wesentliche erfindungsgemäße Erkenntnis liegt darin, daß die Phasenfluktuation unabhängig von der durch die Modulation vorgegebenen Momentan-Phase ausgewertet werden kann, wenn entsprechend dem erfindungsgemäßen Verfahren die modulationsbedingte Momentan-Phase durch Rekonstruktion der idealen Abtastwerte rekonstruiert wird und von der gemessenen Ist-Phase $\varphi_{real}[n]$ die so rekonstruierte Soll-Phase $\varphi_{ideal}[n]$ abgezogen wird.

Nach Durchführen einer Fourier-Transformation im Verfahrensschritt S107 bzw. in der Fourier-Transformations-Einheit 27 liegt das Phasen-Rauschspektrum vor und kann mittels einer Anzeigeeinrichtung 28, beispielsweise einem Display, angezeigt werden.

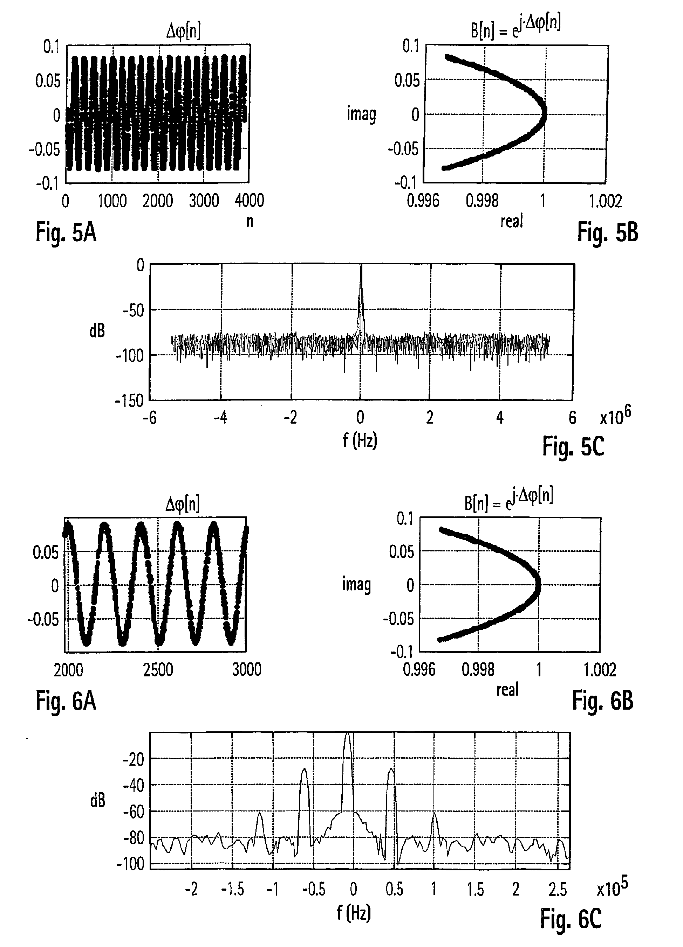

Zur Veranschaulichung der Erfindung ist in Fig. 5A ein Beispiel einer Phasenfluktuation $\Delta\varphi[n]$ als Funktion des Abtastindex n dargestellt. In Fig. 5B ist das zugehörige I/Q-Diagramm des modifizierten komplexen Koeffizienten $B[n]$ dargestellt. Man erkennt, daß die Werte $B[n]$ auf einem Einheitskreis wandern. In Fig. 5C ist das zugehörige Phasen-Rauschspektrum, welches mit dem erfindungsgemäßen Verfahren bestimmt wurde, dargestellt. Fig. 6A zeigt einen vergrößerten Ausschnitt aus Fig. 5A und Fig. 6B zeigt das entsprechende I/Q-Diagramm zu diesem Ausschnitt. Fig. 6C zeigt das entsprechend genauer aufgelöste Phasen-Rauschspektrum.

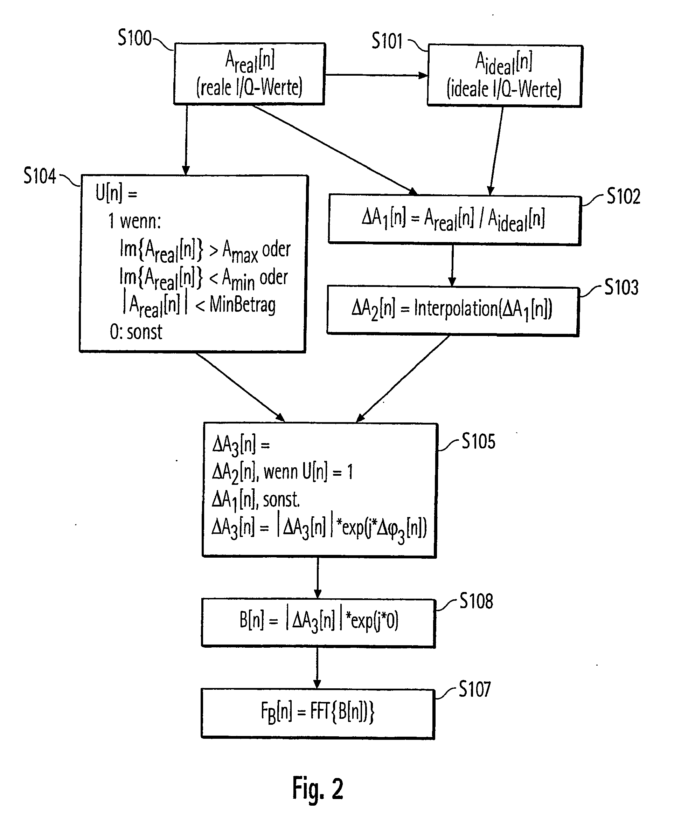

In ähnlicher Weise läßt sich auch das Amplituden-Rauschspektrum auswerten. Die dafür notwendigen Verfahrensschritte sind in dem in Fig. 2 dargestellten Flußdiagramm veranschaulicht. Die Verfahrensschritte S100 bis S105 sind identisch zu den Verfahrensschritten S100 bis S105, die bereits anhand von Fig. 1 erläutert wurden. Im Verfahrensschritt S108 in Fig. 2 werden abweichend von dem Verfahrensschritt S106 in Fig. 1 modifizierte komplexe Quotienten $B[n]$ durch Setzen der Phase $\Delta\varphi_3[n]$ des komplexen Quotienten $\Delta A_3[n]$ auf Null erzeugt:

$$B[n] = \left|\Delta A_3[n]\right| \cdot e^{j \cdot 0} \qquad\qquad (4)$$

Auf diese Weise wirken sich Phasenfluktuationen auf das durch die Fourier-Transformation im Schritt S107 erzeugte Spektrum nicht aus. Statt dessen ist das Spektrum durch die Fluktuationen des Betrags $|\Delta A_3[n]|$ des (ggf. interpolierten) Quotienten $\Delta A_3[n]$ charakterisiert. Die Erzeugung der modifizierten komplexen Quotienten $B[n]$ für das Amplituden-Rauschspektrum erfolgt in einer Modifizierungseinrichtung 29 in Fig. 7. Das Eingangssignal für die Fourier-Transformationseinrichtung 27 kann über eine Umschalteinrichtung 30 zwischen den Modifizierungseinrichtungen 26 und 29 umgeschaltet werden.

Vorteilhafterweise kann die Leistungsdichte pro Filterbandbreite, wobei die Filterbandbreite eine feste Kennzahl der verwendeten FFT (East Eourier Transform) ist und die von dem zeitlichen Abstand der ursprünglichen I/Q-Werte abhängt, in eine andere Einheit (z.B. dBc/Hz, also Leistungsdichte = Leistung pro 1 Hz Bandbreite) umgerechnet werden. Dies ist insbesondere bei der Beurteilung von Rauschstörungen sinnvoll. Bei der Beurteilung von schmalbandigen Störungen (CW-Störungen) ist es sinnvoll, die Einheit der Pegelachse unverändert zu lassen. Mit einem Schalter kann gegebenenfalls die gewünschte Einheit bzw. Skalierung ausgewählt werden.

Die Erfindung ist nicht auf das beschriebene Ausführungsbeispiel beschränkt. Vielmehr sind im Rahmen der Erfindung zahlreiche Modifikationen und Verbesserungen möglich. Beispielsweise kann bei der Erzeugung der idealen Abtastwerte $A_{ideal}[n]$ aus den realen Abtastwerten $A_{real}[n]$ auch die in der Regel vorhandene Fehlerkorrekturcodierung ausgewertet werden, wodurch die Genauigkeit weiter erhöht wird, denn Fehlzuweisungen auf falsche ideale Abtastwerte $A_{ideal}[n]$ erzeugen sprunghafte, real nicht vorhandene Phasen- und/oder Amplituden-Fluktuationen.

**Patentansprüche**

1. Verfahren zum Bestimmen des Phasen-Rauschspektrums eines digital modulierten Eingangs-Signals mit folgenden Verfahrensschritten:

Erzeugen (S100) gemessener komplexer Abtastwerte durch digitales Abtasten der Inphase-Komponente und der Quadraturphase-Komponente des Eingangs-Signals im Basisband,

- Ermitteln (S101) idealer komplexer Abtastwerte aus den realen Abtastwerten,
- Bilden (S102) komplexer Quotienten aus den gemessenen komplexen Abtastwerten und den idealen komplexen Abtastwerten,
- Erzeugen (S106) modifizierter komplexer Quotienten durch Setzen des Betrags der komplexen Quotienten auf 1 und
- Durchführen (S107) einer Fourier-Transformation mit den modifizierten komplexen Quotienten,

**dadurch gekennzeichnet,**
**dass** vor dem Erzeugen modifizierter komplexer Quotienten die zenige komplexen Quotienten zeweils durch einen Interpolationswert aus den vorangegangenen und/oder nachfolgenden Werten ersetzt wird,
wenn der Betrag des zugehörigen gemessenen Abtastwerts kleiner als ein erster Schwellwert ist,
und/oder,
wenn der Imaginärteil des zugehörigen gemessenen Abtastwerts größer als ein zweiter Schwellwert ist, und/oder,
wenn der Imaginärteil des zugehörigen gemessenen Abtastwerts kleiner als ein dritter Schwellwert ist.

2. Verfahren zum Bestimmen des Amplituden-Rauschspektrums eines digital modulierten Eingangs-Signals mit folgenden Verfahrensschritten:

- Erzeugen (S100) gemessener komplexer Abtastwerte durch digitales Abtasten der Inphase-Komponente und der Quadraturphase-Komponente des Eingangs-Signals im Basisband,
- Ermitteln (S101) idealer komplexer Abtastwerte aus den gemessenen Abtastwerten,
- Bilden (S102) komplexer Quotienten aus den gemessenen komplexen Abtastwerten und den idealen komplexen Abtastwerten,
- Erzeugen (S106) modifizierter komplexer Quotienten durch Setzen der Phase der komplexen Quotienten auf 0 und
- Durchführen (S107) einer Fourier-Transformation mit den modifizierten komplexen Quotienten,

**dadurch gekennzeichnet,**
**dass** vor dem Erzeugen modifizierter komplexer Quotienten die zenige komplexen Quotienten zeweils durch einen Interpolationswert aus den vorangegangenen und/oder nachfolgenden Werten ersetzt wird,
wenn der Betrag des zugehörigen gemessenen Abtastwerts kleiner als ein erster Schwellwert ist,
und/oder,
wenn der Imaginärteil des zugehörigen gemessenen Abtastwerts größer als ein zweiter Schwellwert ist, und/oder,
wenn der Imaginärteil des zugehörigen gemessenen Abtastwerts kleiner als ein dritter Schwellwert ist.

3. Verfahren nach Anspruch 1 oder 2,
**dadurch gekennzeichnet,**
**dass** das Eingangs-Signal nach dem mVSB-Verfahren, insbesondere dem 8VSB-Verfahren, digital moduliert ist.

4. Verfahren nach Anspruch 3,
**dadurch gekennzeichnet,**
**dass** nur die Inphase-Komponente der idealen Abtastwerte aus der Inphase-Komponente der gemessenen Abtastwerte ermittelt wird, und
**dass** die Quadraturphase-Komponente der idealen Abtastwerte durch eine Hilbert-Transformation aus der Inphase-Komponente der idealen Abtastwerte erzeugt wird.

5. Digitales Speichermedium mit elektronisch auslesbaren Steuersignalen, die so mit einem programmierbaren Computer oder digitalen Signalprozessor zusammenwirken, dass das Verfahren nach einem der Ansprüche 1 bis 4 ausgeführt wird.

6. Computerprogramm-Produkt mit auf einem maschinenlesbaren Träger gespeicherten Programmcode-Mitteln, um alle Schritte gemäß einem der Ansprüche 1 bis 4 durch zu führen, wenn das Programm auf einem Computer oder einem digitalen Signalprozessor ausgeführt wird.

7. Computerprogramm mit Programmcode-Mitteln, um alle Schritte gemäß einem der Ansprüche 1 bis 4 durch zu führen, wenn das Programm auf einem Computer oder einem digitalen Signalprozessor ausgeführt wird.

8. Computerprogramm mit Programmcode-Mitteln, um alle Schritte gemäß einem der Ansprüche 1 bis 4 durch zu führen, wenn das Programm auf einem maschinenlesbaren Datenträger gespeichert ist.

## Claims

1. A method for determining the phase-noise spectrum of a digitally modulated input signal with the following method steps:

   - generation (S100) of measured complex sampled values through digital sampling of the in-phase component and the quadrature-phase component of the input signal in the baseband;
   - determination (S101) of ideal complex sampled values from the real sampled values;
   - formation (S102) of complex quotients from the measured complex sampled values and the ideal complex sampled values;
   - generation (S106) of modified complex quotients by setting the modulus of the complex quotients to 1; and
   - implementation (S107) of a Fourier transform with the modified complex quotients,

   **characterised in that,**
   before the generation of modified complex quotients, those complex quotients are replaced in each case by an interpolation value from the preceding and/or following values,
   if the modulus of the associated measured sampled value is less than a first threshold value, and/or,
   if the imaginary part of the associated measured sampled value is greater than a second threshold value, and/or,
   if the imaginary part of the associated measured sampled value is less than a third threshold value.

2. A method for determining the amplitude-noise spectrum of a digitally modulated input signal with the following method steps:

   - generation (S100) of measured complex sampled values through digital sampling of the in-phase component and the quadrature-phase component of the input signal in the baseband;
   - determination (S101) of ideal complex sampled values from the measured sampled values;
   - formation (S102) of complex quotients from the measured complex sampled values and the ideal complex sampled values;
   - generation (S106) of modified complex quotients by setting the phase of the complex quotients to 0; and
   - implementation (S107) of a Fourier transform with the modified complex quotient,

   **characterised in that,**
   before the generation of modified complex quotients, those complex quotients are replaced in each case by an interpolation value from the preceding and/or following values,
   if the modulus of the associated measured sampled value is less than a first threshold value, and/or,
   if the imaginary part of the associated measured sampled value is greater than a second threshold value, and/or,
   if the imaginary part of the associated measured sampled value is less than a third threshold value.

3. The method according to claim 1 or 2,
   **characterised in that**
   the input signal is digitally modulated according to the mVSB method, especially the 8VSB method.

**4.** The method according to claim 3,
**characterised in that**
only the in-phase component of the ideal sampled values from the in-phase component of the measured sampled values is determined, and
that the quadrature-phase component of the ideal sampled values is generated by a Hilbert transformation from the in-phase component of the ideal sampled values.

**5.** A digital storage medium with electronically readable control signals, which cooperate with a programmable computer or digital signal processor in such a manner that the method according to any one of claims 1 to 4 is executed.

**6.** A digital computer software product with program-code means stored on a machine-readable medium, in order to implement all steps according to any one of claims 1 to 4, when the software is executed on a computer or a digital signal processor.

**7.** A computer program with program-code means in order to implement all steps according to any one of claims 1 to 4, when the software is executed on a computer or a digital signal processor.

**8.** A computer program with program-code means in order to implement all steps according to any one of claims 1 to 4, when the software is stored on a machine-readable data medium.

**Revendications**

**1.** Procédé de détermination du spectre de bruit de phase d'un signal d'entrée modulé numériquement, comprenant les étapes suivantes consistant à :

- générer (S100) des valeurs d'échantillonnage complexes mesurées par échantillonnage numérique de la composante en phase et de la composante en quadrature du signal d'entrée dans la bande de base,
- déterminer (S101) des valeurs d'échantillonnage complexes idéales à partir des valeurs d'échantillonnage réelles,
- former (S 102) des quotients complexes à partir des valeurs d'échantillonnage complexes mesurées et des valeurs d'échantillonnage complexes idéales,
- générer (S106) des quotients complexes modifiés en réglant la grandeur du quotient complexe sur 1, et
- exécuter (S 107) une transformation de Fourier avec les quotients complexes modifiés,

**caractérisé en ce que**
avant la génération de quotients complexes modifiés, lesdits quotients complexes sont respectivement remplacés par une valeur d'interpolation issue des valeurs précédentes et/ou suivantes,
lorsque la grandeur de la valeur d'échantillonnage mesurée associée est inférieure à une première valeur de seuil, et/ou
lorsque la partie imaginaire de la valeur d'échantillonnage mesurée associée est supérieure à une deuxième valeur de seuil,
et/ou,
lorsque la partie imaginaire de la valeur d'échantillonnage mesurée associée est inférieure à une troisième valeur de seuil.

**2.** Procédé de détermination du spectre de bruit de d'amplitude d'un signal d'entrée modulé numériquement, comprenant les étapes suivantes consistant à :

- générer (S100) des valeurs d'échantillonnage complexes mesurées par échantillonnage numérique de la composante en phase et de la composante en quadrature du signal d'entrée dans la bande de base,
- déterminer (S 101) des valeurs d'échantillonnage complexes idéales à partir des valeurs d'échantillonnage mesurées,
- former (S 102) des quotients complexes à partir des valeurs d'échantillonnage complexes mesurées et des valeurs d'échantillonnage complexes idéales,
- générer (S 106) des quotients complexes modifiés en réglant la phase du quotient complexe sur 0, et
- exécuter (S 107) une transformation de Fourier avec les quotients complexes modifiés,

**caractérisé en ce que**
avant la génération de quotients complexes modifiés, lesdits quotients complexes sont respectivement remplacés par une valeur d'interpolation issue des valeurs précédentes et/ou suivantes,
lorsque la grandeur de la valeur d'échantillonnage mesurée associée est inférieure à une première valeur de seuil, et/ou
lorsque la partie imaginaire de la valeur d'échantillonnage mesurée associée est supérieure à une deuxième valeur de seuil,
et/ou,
lorsque la partie imaginaire de la valeur d'échantillonnage mesurée associée est inférieure à une troisième valeur de seuil.

3. Procédé selon la revendication 1 ou 2,
   **caractérisé en ce que** le signal d'entrée est modulé de façon numérique selon le procédé mVSB, en particulier selon le procédé 8VSB.

4. Procédé selon la revendication 3,
   **caractérisé en ce que** uniquement la composante en phase des valeurs d'échantillonnage idéales est déterminée à partir de la composante en phase des valeurs d'échantillonnage mesurées, et
   **en ce que** la composante en quadrature des valeurs d'échantillonnage idéales est générée par une transformation de Hilbert à partir de la composante en phase des valeurs d'échantillonnage idéales.

5. Support de stockage numérique avec des signaux de commande lisibles de façon électronique, qui coopèrent avec un ordinateur ou un processeur de signaux numériques programmable de telle sorte que le procédé selon l'une quelconque des revendications 1 à 4 est exécuté.

6. Produit de programme informatique avec des moyens de code de programme stockés sur un support lisible par machine afin d'exécuter toutes les étapes selon l'une quelconque des revendications 1 à 4 lorsque le programme est exécuté sur un ordinateur ou un processeur de signaux numériques.

7. Programme informatique avec des moyens de code de programme pour exécuter toutes les étapes selon l'une quelconque des revendications 1 à 4 lorsque le programme est exécuté sur un ordinateur ou un processeur de signaux numériques.

8. Programme informatique avec des moyens de code de programme pour exécuter toutes les étapes selon l'une quelconque des revendications 1 à 4 lorsque le programme est stocké sur un support de données lisible par machine.

S100 — $A_{real}[n]$
(reale I/Q-Werte)

S101 — $A_{ideal}[n]$
(ideale I/Q-Werte)

S104 —
U[n] =
  1 wenn:
    $Im\{A_{real}[n]\} > A_{max}$ oder
    $Im\{A_{real}[n]\} < A_{min}$ oder
    $|A_{real}[n]| < MinBetrag$
  0: sonst

S102 — $\Delta A_1[n] = A_{real}[n] / A_{ideal}[n]$

S103 — $\Delta A_2[n] = Interpolation(\Delta A_1[n])$

S105 —
$\Delta A_3[n] =$
$\Delta A_2[n]$, wenn U[n] = 1
$\Delta A_1[n]$, sonst.
$\Delta A_3[n] = |\Delta A_3[n]| * exp(j * \Delta \varphi_3[n])$

S106 — $B[n] = 1 * exp(j * \Delta \varphi_3[n])$

S107 — $F_B[n] = FFT\{B[n]\}$

**Fig. 1**

S100

$$A_{real}[n]$$
(reale I/Q-Werte)

S101

$$A_{ideal}[n]$$
(ideale I/Q-Werte)

S104

$$U[n] =$$
1 wenn:
$$Im\{A_{real}[n]\} > A_{max} \text{ oder}$$
$$Im\{A_{real}[n]\} < A_{min} \text{ oder}$$
$$|A_{real}[n]| < MinBetrag$$
0: sonst

S102

$$\Delta A_1[n] = A_{real}[n] / A_{ideal}[n]$$

S103

$$\Delta A_2[n] = \text{Interpolation}(\Delta A_1[n])$$

S105

$$\Delta A_3[n] =$$
$$\Delta A_2[n], \text{ wenn } U[n] = 1$$
$$\Delta A_1[n], \text{ sonst.}$$
$$\Delta A_3[n] = |\Delta A_3[n]| * \exp(j * \Delta\varphi_3[n])$$

S108

$$B[n] = |\Delta A_3[n]| * \exp(j*0)$$

S107

$$F_B[n] = FFT\{B[n]]\}$$

## Fig. 2

11

Fig. 3

Fig. 4

Fig. 5A

Fig. 5B

Fig. 5C

Fig. 6A

Fig. 6B

Fig. 6C

Fig. 7

**EP 1 547 293 B1**

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- US 6366621 B1
- US 6246717 B1